# EUROPEAN PATENT SPECIFICATION

(11) **EP 1 524 466 B1**
(45) Date of publication and mention of the grant of the patent: **20.02.2008**
(21) Application number: 04104557.6
(22) Date of filing: 21.09.2004
(51) Int. Cl.: F16M 11/04, F16M 11/24, F16M 11/12

(54) **Clamp support system for electrical, electronic, optical and mechanical devices and components**
Vorrichtung mit Klemmhalterung für elektrische, elektronische ,optische und mechanische Einrichtungen und Komponenten
Système à collier de support pour dispositifs et composents électriques,électroniques,optiques et mécaniques

(30) Priority: 16.10.2003 IT MI20032012
(43) Date of publication of application: 20.04.2005
(73) Proprietor: ELESA S.p.A., 20129 Milano (IT)
(72) Inventor: Franchini, Gian Carlo, 42015 Correggio, RE (IT)
(74) Representative: Faggioni, Giovanmaria

(56) References cited:
- US-A- 135 924
- US-A- 2 896 901
- US-A- 5 615 854
- US-B1- 6 349 905
- US-B1- 6 390 424

## Description

The present invention relates to a support system using clamps, of extreme simplicity and effectiveness, formed by few low-cost elements whose connection into the system is accomplished in a very practical and quick way, achieving a high degree of precision. A prior art clamp support system is shown in the document US 5 615 854 A.

The system is ideally suited to support, in the most convenient way, particularly devices such as photocells, sensors, light sources, reflectors and other such devices, but is more generally suited also to mechanical, optical, electrical and electronic components of the most disparate kinds.

The system is of the type comprising a basic support, a device support, one or more section bars connecting said supports and possibly one or more connections between said section bars, and is characterised in that said supports and connections are made of plastic material and have seats in form of holes housing said section bars which seats are bounded by circumferentially continuous walls which comprise at least a deformable partial area thin enough to be elastically yielding, and in that to said supports (1, 2) are associated tightening means acting in correspondence of said deformable partial areas, in order to lock said section bars in the corresponding seats thereof, by deforming said partial area against the surface of the bars.

Preferably, in this system, said section bars and the seats housing said bars, formed within said supports and/or said connections, have matching grooved surfaces.

Furthermore, said basic support is formed by a U-shaped body, whose central opening houses a wheel, in which a housing seat of a section bar is formed, said wheel having front toothings capable of cooperating with at least one protruding rib of said U-shaped body for the locking of said wheel through said tightening means.

The invention will now be described in greater detail in the following, with reference to the accompanying drawings, which represent a currently preferred embodiment thereof and in which:

fig. 1 is an overall perspective view of a support system according to the invention, suitable for example for photocells;

fig. 2 is a perspective view of the U-shaped body of the basic support

figs. 3 and 4 are a cross and a longitudinal section, respectively, of the basic support of fig. 1;

figs. 5 and 6 are a cross section and an axial section, respectively, of a wheel having front toothings, to be mounted in the U-shaped body of figs. 2 to 4, of which

fig. 7 is a perspective view of the wheel of figs. 5, 6;

figs. 8 and 9 are two perspective views and fig. 10 is a section view of a 90° connection for the support system of fig. 1;

figs. 11 to 18 are perspective views of four different types of support housing different devices of the system according to the invention; and

fig. 19 is a section view of the device support of figs. 17 and 18.

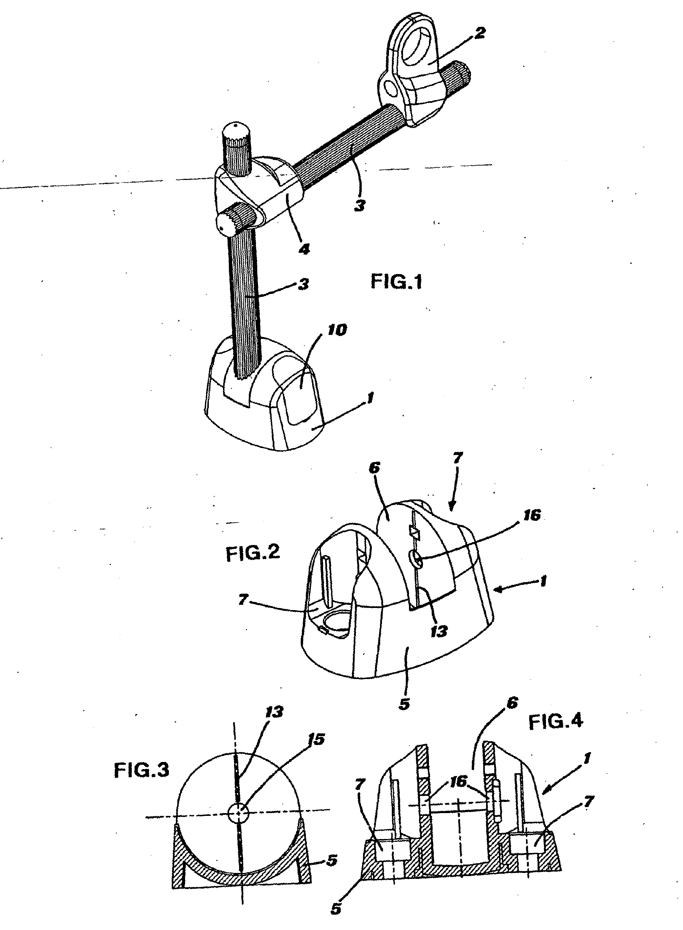

With reference to the drawings, the clamp support system according to the invention consists of few low-cost and easy-to-connect elements, such as - with particular reference to fig. 1 - a basic support 1, a device support 2, one or more section bars 3 connecting said supports 1 and 2 and possibly one or more connections such as 4 between said section bars 3 (two in the case of Fig. 1). Said system is suited to house, on the device support thereof, various commercially available devices such as, for example and preferably, photocells, sensors, light sources, reflectors, but also, more in general, mechanical, optical, electrical and electronic components of the most disparate kinds.

According to the main feature of the invention, the supports 1 and 2 and the connections 4 are made of plastic material and it is provided that the connections between them and the section bars 3 are made stable by the deformation, through tightening means, of areas next to the seats of the section bars of the supports and connections, operating as clamps.

More particularly, the seats housing said section bars (3) are bounded by walls which are deformable, at least in a partial area, and to said supports 1, 2 and connections 4 are associated tightening means acting in correspondence of said deformable partial areas, in order to lock said section bars in the corresponding seats thereof.

As far as the section bars 3 are concerned, they can be made of metal (preferably of light alloys) or plastic material.

Figs. 2 to 7 illustrate a currently preferred embodiment of the basic support 1 of the clamp system according to the invention. It comprises a U-shaped body 5 having a central opening 6 and two side seats 7, and a wheel 8 in which a seat 9 for a section bar 3 is obtained, such wheel being meant to be arranged inside said central opening 6 of the body 5 in an adjustable position about the axis of said wheel. A nut-screw pair or a bolt (not shown) is provided to engage in the holes 16 of the walls of the central opening 6, with the function both of a pivot pin for the wheel 8 and of a stay locking the position of said wheel. In said seats 7 are inserted screws (not shown) fixing the body 5 and hence the basic support 1 and the entire system, for example onto a wall.

According to the invention, the wheel 8 has front toothings 11 and 12, with which can engage a protrusion 13 of at least one of the inner walls of the central opening 6 of the body 1, to adjust the wheel position by rotating said wheel, thereby orienting in the desired way the seat 9 of the section bar 3 and the section bar itself and consequently locking said wheel in said adjusted position.

The wheel 8 is arranged inside the central opening 6 of the body 5, the latter being shaped so as to match the shape of said wheel, as can be seen in the drawings, with an own central hole 15 in correspondence of holes 16 of the walls of the opening 6. Once the seat 9 is mounted in the central opening 6 and a bolt pin has been made to pass through holes 15 and 16, the wheel can be made to rotate in order to orient the seat 9 of the section bar 3 in the desired position; thereafter the wheel is locked by tightening of said bolt (or of the nut-screw pair) in holes 15 and 16. By doing this, in fact, the two walls of the opening 6 are drawn near and the protrusion 13 thereof engages the toothings 11 and 12, thereby preventing any possible rotation of the wheel 8, the position of which is thus locked.

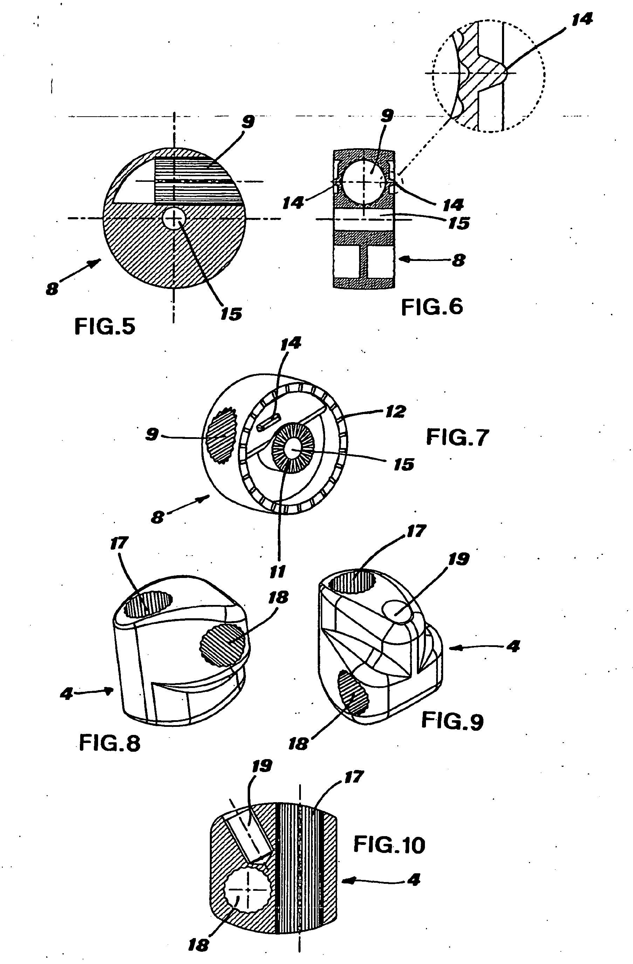

According to a fundamental feature of the invention, on wheel 8, and more precisely in a partial area corresponding to the seat 9, protrusions 14 are further obtained, which project beyond the outer surface of the wheel 8. In said partial area, the wall of the seat 9 is thin enough to be elastically yielding; thanks to this arrangement, when a section bar 3 is inserted into seat 9, said section bar too is locked in the position attributed thereto before tightening of said bolt, since the protrusions 14 (pushed by the side walls of the opening 6 - see detail of fig. 6 - which bend inwards, deform said seat 9 and prevent rotations and axial shifts of the section bar 3 therein.

The above described locking effect is aided by grooves on the outer wall of section bar 3 and on the inner wall of the seat 9 therefor, as shown by the drawings. Suitably, said grooved walls are obtained through longitudinal ribs and/or grooves with well-connected radiuses to avoid dirt deposits and to ease cleaning operations; said ribs and grooves evidently oppose any rotation of the section bars 3 in the seats 9 therefor of the wheel 8.

With the system according to the invention it is possible to carry out adjustments of the wheel 8 in the body 5, subsequently locking the section bar, with preset angles in respect of the constraint plane, preferably comprised between -15° and +120°. Once the desired adjustment has been carried out, the covers 10 protecting the seats 7 and providing an improved outer appearance of the support 1 can be applied.

Figs. 8 to 10 illustrate a 90° connection of the system according to the invention. Said connection is a plastic body 4 in which seats 17 and 18 are obtained, whose axes are at 90° to each other; each of said seats is intended for a corresponding section bar 3 of the above mentioned type. In this case, too, it has been resorted to grooved-surface seats.

As appears from fig. 10, a hole 19 is drilled in the body 4 in an intermediate position between the seats 17 and 18, which are perpendicular to each other; the axis of said hole 19 is oblique in respect of the axes of the seats 17, 18. Hole 19 extends within the body 4 to the point where the bottom of said hole is near the walls of said seats 17, 18. In this way at least one partial area of said walls is thin enough to be elastically yielding. As a consequence, it is possible, once the section bars 3 have been inserted in the desired position in the seats 17, 18, to lock said section bars in said position thanks to a single screw (not shown) inserted in the sloping hole 19. By fully tightening this tightening means, in fact, partial areas of the walls of such seats are deformed and locking of the section bars 3 is obtained, thereby preventing rotations and axial shifts thereof.

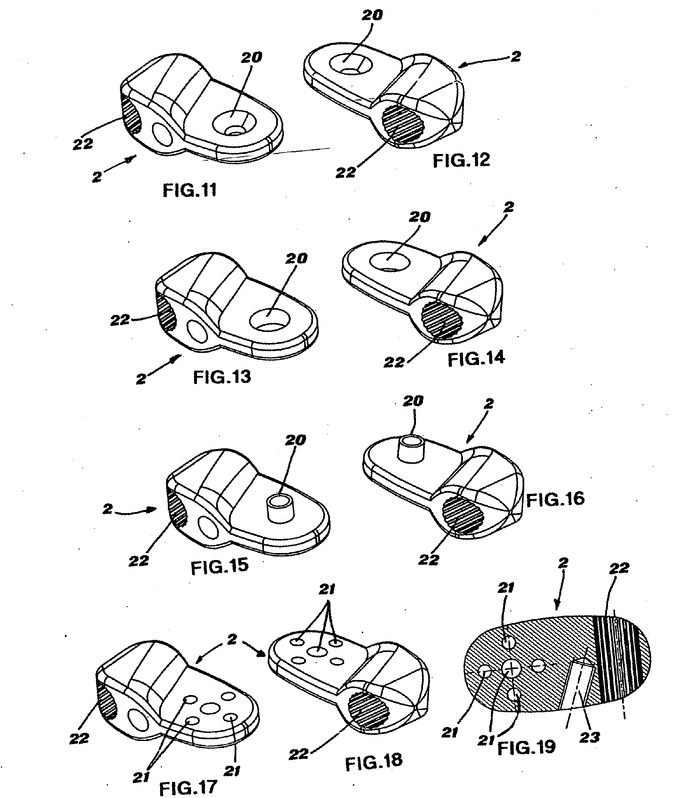

Finally, figs. 11 to 19 represent some types of device supports for different devices of the system according to the invention. Four different supports 2 with individual seats 20 or with multiple seats 21 meant to receive and/or fix various types of devices have been illustrated, each in two perspective views.

In particular, the support illustrated in figs. 11, 12 has a seat 20 in the shape of a countersunk hole; the support of figs. 13, 14 has a cylindrical-wall hole 20; the support of figs. 15, 16 has a hole 20 with a bush guide; and the support of figs. 17, 18 and 19 has several holes 21 arranged in the shape of a cross; in each of these supports a grooved seat 22 is provided for the section bar 3 to which said support is applied.

From fig. 19, which is a section view of the support 2 with multiple seats 21, it can be easily seen how locking of the support 2 on the section bar 3 is accomplished, i.e. in the same manner as in the case of the connection 4 of fig. 10, by screw-ing on a screw (not shown) within a suitable threaded hole 23 arranged in the proximity of the seat 22 and sloping in respect thereof in order to better guarantee deformation thereof, through which deformation said locking on said section bar 3 is achieved.

The clamp support system according to the invention allows to achieve remarkable technical results.

First of all, it consists of a small number of simple low-cost elements which cooperate according to a common principle and are activated and inactivated each operating onto a single tightening means.

The system for the first time further allows to achieve tilts different from 90° tilts (and varying within a wide angle range) in respect of the constraint plane of the basic support, thanks to the specific configuration of the latter.

Moreover, the use of grooved-surface section bars, while preventing rotations, even under stress, of the section bars themselves in the support and connection seats, as well as axial shifts in respect thereto, guarantees accurate and easy-to-verify alignments.

It is understood that the practical embodiments of the system according to the invention, different from those described and illustrated herein, may be subject to changes and variations.

## Claims

1. Clamp support system formed by few low-cost and easy-to-connect elements, particularly for devices such as photocells, sensors, light sources, reflectors and other such devices, of the type comprising a basic support (1), a device support (2), and at least one section bar (3) connecting said supports (1, 2) **characterised in that** said supports (1, 2) are made of plastic material and have seats in form of holes (9,17,18,22) housing said section bars (3), said seats being bounded by circumferentially continuous walls which comprise at least a deformable, partial area thin enough to be elastically yielding, and **in that** to said supports (1, 2) tightening means are associated, acting in correspondence of said deformable partial areas, in order to lock said section bars in the corresponding seats thereof by deforming said partial area against the surface of the bars (3).

2. Clamp support system as claimed in claim 1), wherein one or more connections (4) between at least two of said section bars (3) are further provided, said connections (4) in turn being provided with seats housing said section bars, **characterised in that** even these connections (4) are made of plastic material, with said housing seats bounded by walls which are deformable, at least in a partial area.

3. Clamp support system as claimed in claims 1) and 2), **characterised in that** said partial areas of the walls of the seats housing said supports (1, 2) and connections (4) are elastically deformable.

4. Clamp support system as claimed in claims 1), 2) or 3), **characterised in that** said partial deformable areas of the walls of the housing seats of said section bars (3) are formed in correspondence of the bottom of a hole drilled in said supports (1, 2) and connections (4).

5. Clamp support system as claimed in claim 4), **characterised in that** said hole drilled in said supports (1, 2) and connections (4) is oblique in respect to each axis of the housing seats with which it cooperates.

6. Clamp support system as claimed in claims 4) or 5), **characterised in that** said hole drilled in said supports (1, 2) and connections (4) is threaded and said tightening means are screws or bolts.

7. Clamp support system as claimed in claim 6), **characterised in that** for each support (1, 2) and/or connection (4) a single tightening screw or a single tightening bolt is provided.

8. Clamp support system as claimed in claims 1), 2) or 3), **characterised in that** said section bars (3) and the seats (9, 17, 18, 22) housing said bars, formed within said supports (1, 2) and/or said connections (4), have matching grooved surfaces.

9. Clamp support system as claimed in claim 1), **characterised in that** said basic support 1) is formed by a U-shaped body (5), whose central opening (6) houses a wheel (8), in which a housing seat (9) of a section bar (3), is formed, said wheel having front toothings (11, 12) capable of cooperating with at least one protruding rib (13) of said body (5), for the locking of said wheel (8) through said tightening means.

10. Clamp support system as claimed in claim 9), **characterised in that** said wheel (8) is mounted rotating on an axis crossing said basic support (1), to be oriented in position, and secured in an adjusted position through said tightening means.

11. Clamp support system as claimed in claims 9) or 10), **characterised in that** said tightening means of the basic support (1) consist of a single bolt, which crosses said wheel (8) to form the rotation axis thereof, and **in that** the tightening of said bolt deforms the body (5) of the support (1) itself to lock the wheel (8) in the desired position through the cooperation of said front toothings (11, 12) with said protruding rib (13).

12. Clamp support system as claimed in any one of the claims 9) to 11), **characterised in that** said wheel (8) is equipped, in correspondence of said partial elastically deformable area of the wall of the corresponding housing seat of the section bar (3), with a protrusion (14) which extends beyond the outer front surface of the wheel (8).

13. Clamp support system as in any one of the preceding claims, **characterised in that** said section bars (3) are made of metal.

14. Clamp support system as claimed in any one of the claims 1) to 12), **characterised in that** said section bars (3) are made of plastic material.

## Patentansprüche

1. Klemmhalterungssystem, aus preiswerten und leicht zu verbindenden Elementen gebildet, insbesondere für Vorrichtungen wie Fotozellen, Sensoren, Lichtquellen, Reflektoren und sonstigen solcher Vorrichtungen, von der Art mit einer Grundhalterung (1), einer Vorrichtungshalterung (2) und mindestens einer Profilstange (3), welche die Halterungen (1, 2) verbindet, **dadurch gekennzeichnet, dass** die Halterungen (1, 2) aus Plastikmaterial hergestellt sind und Aufnahmen in Form von Löchern (9, 17, 18, 22) aufweisen, in denen die Profilstangen (3) angeordnet sind, wobei die Aufnahmen durch umfangsmäßig kontinuierliche Wände begrenzt sind, welche mindestens einen verformbaren Teilbereich umfassen, der hinreichend dünn ist. um elastisch nachgiebig zu sein, und **dadurch**, dass den Halterungen (1, 2) Anziehmittel zugeordnet sind, die entsprechend der verformbaren Teilbereiche wirken, um die Profilstangen der entsprechenden Aufnahmen zu befestigen, indem der Teilbereich gegen die Oberfläche der Stangen (3) verformt wird.

2. Klemmhalterungssystem nach Anspruch 1), wobei ferner eine oder mehr Verbindungen (4) zwischen mindestens zwei der Profilstangen (3) vorgesehen sind, wobei die Verbindungen (4) wiederum mit Aufnahmen versehen sind, die in den Profilstangen angeordnet sind, **dadurch gekennzeichnet, dass** selbst diese Verbindungen (4) aus Plastikmaterial hergestellt sind, wobei die angeordneten Aufnahmen mindestens in einem Teilbereich durch Wände, welche verformbar sind, begrenzt sind.

3. Klemmhalterungssystem nach Anspruch 1) und 2), **dadurch gekennzeichnet, dass** die Teilbereiche der Wände der die Halterungen (1, 2) und Verbindungen (4) aufnehmenden Aufnahmen elastisch verformbar sind.

4. Klemmhalterungssystem nach Anspruch 1), 2) oder 3), **dadurch gekennzeichnet, dass** die teilweise verformbaren Bereiche der Wände der Aufnahmen der Profilstangen (3) entsprechend des Bodens eines in die Halterungen (1, 2) und Verbindungen (4) gebohrten Lochs gebildet sind.

5. Klemmhalterungssystem nach Anspruch 4), **dadurch gekennzeichnet, dass** das in die Halterungen (1, 2) und Verbindungen (4) gebohrte Loch schräg in Bezug zu jeder Achse der Aufnahmen, mit welchen es zusammenwirkt, ist.

6. Klemmhalterungssystem nach Anspruch 4) oder 5), **dadurch gekennzeichnet, dass** das in die Halterungen (1, 2) und Verbindungen (4) gebohrte Loch ein Gewinde hat und die Anziehmittel Schrauben oder Bolzen sind.

7. Klemmhalterungssystem nach Anspruch 6), **dadurch gekennzeichnet, dass** für jede Halterung (1, 2) und/oder Verbindung (4) eine einzelnen Anziehschraube oder ein einzelner Anziehbolzen vorgesehen ist.

8. Klemmhalterungssystem nach Anspruch 1), 2) oder 3), **dadurch gekennzeichnet, dass** die Profilstangen (3) und die die Stangen aufnehmenden Aufnahmen (9, 17, 18, 22), welche innerhalb der Halterungen (1, 2) und/oder der Verbindungen (4) gebildet sind, übereinstimmende genutete Flächen aufweisen.

9. Klemmhalterungssystem nach Anspruch 1), **dadurch gekennzeichnet, dass** die Grundhalterung 1) durch einen U-förmigen Körper (5) gebildet ist, dessen mittige Öffnung (6) ein Rad (8) aufnimmt, in welchem eine Aufnahme (9) einer Profilstange (3) gebildet wird, wobei das Rad Frontverzahnungen (11, 12) aufweist, die mit mindestens einer vorstehenden Rippe (13) des Körpers (5) zum Befestigen des Rads (8) durch die Anziehmittel zusammenwirken können.

10. Klemmhalterungssystem nach Anspruch 9), **dadurch gekennzeichnet, dass** das Rad (8) rotierend auf einer Achse, welche die Grundhalterung (1) durchquert, angeordnet ist, um positioniert ausgerichtet und in einer durch die Anziehmittel angepassten Position fixiert zu werden.

11. Klemmhalterungssystem nach Anspruch 9) oder 10), **dadurch gekennzeichnet, dass** die Anziehmittel der Grundhalterung (1) aus einem einzelnen Bolzen bestehen, der das Rad (8) durchquert, um dessen Rotationsachse zu bilden und **dadurch**, dass das Anziehen des Bolzens den Körper (5) der Halterung (1) selber verformt, um das Rad (8) in der gewünschten Position durch das Zusammenwirken der Frontverzahnungen (11, 12) mit der vorstehenden Rippe (13) zu befestigen.

12. Klemmhalterungssystem nach einem der Ansprüche 9) bis 11), **dadurch gekennzeichnet, dass** das Rad (8) entsprechend des teilweise elastisch verformbaren Bereichs der Wand der entsprechenden Aufnahme der Profilstange (3) ausgerüstet ist, mit einem Vorsprung (14), der sich über die äußere Frontfläche des Rads (8) hinaus erstreckt.

13. Klemmhalterungssystem nach einem der vorhergehenden Ansprüche, **dadurch gekennzeichnet, dass** die Profilstangen (3) aus Metall hergestellt sind.

14. Klemmhalterungssystem nach einem der vorhergehenden Ansprüche 1) bis 12), **dadurch gekennzeichnet, dass** die Profilstangen (3) aus Plastikmaterial hergestellt sind.

## Revendications

1. Système de support à pinces formé par un petit nombre d'éléments peu coûteux et faciles à raccorder, en particulier pour des dispositifs tels que des cellules photoélectriques, des capteurs, des sources lumineuses, des réflecteurs et d'autres dispositifs de ce type, du type comprenant un support de base (1), un support de dispositif (2), et au moins une barre profilée (3) raccordant lesdits supports (1, 2), **caractérisé en ce que** lesdits supports (1, 2) sont faits de matière plastique et comportent des sièges sous la forme de trous (9, 17, 18, 22) logeant lesdites barres profilées (3), lesdits sièges étant délimités par des parois continues à la circonférence qui comprennent au moins une zone partielle, déformable, suffisamment mince pour céder élastiquement, et **en ce que**, auxdits supports (1, 2) sont associés des moyens de serrage, opérant en correspondance desdites zones partielles déformables, afin de verrouiller lesdites barres profilées dans leurs sièges correspondants par déformation de ladite zone partielle contre la surface des barres (3).

2. Système de support à pinces selon la revendication 1, dans lequel un ou plusieurs raccords (4) entre au moins deux desdites barres profilées (3) sont en outre prévus, lesdits raccords (4) étant, à leur tour, pourvus de sièges logeant lesdites barres profilées, **caractérisé en ce que** même ces raccords (4) sont faits de matière plastique, lesdits sièges de logement étant délimités par des parois qui sont déformables, au moins dans une zone partielle.

3. Système de support à pinces selon les revendications 1 et 2, **caractérisé en ce que** lesdites zones partielles des parois des sièges logeant lesdits supports (1, 2) et raccords (4) sont déformables élastiquement.

4. Système de support à pinces selon les revendications 1, 2 ou 3, **caractérisé en ce que** lesdites zones partielles déformables des parois des sièges de logement desdites barres profilées (3) sont formées en correspondance du dessous d'un trou percé dans lesdits supports (1, 2) et raccords (4).

5. Système de support à pinces selon la revendication 4, **caractérisé en ce que** ledit trou percé dans lesdits supports (1, 2) et raccords (4) est oblique par rapport à chaque axe des sièges de logement avec lesquels il coopère.

6. Système de support à pinces selon la revendication 4 ou 5, **caractérisé en ce que** ledit trou percé dans lesdits supports (1, 2) et raccords (4) est taraudé et lesdits moyens de serrage sont des vis ou des boulons.

7. Système de support à pinces selon la revendication 6, **caractérisé en ce que**, pour chaque support (1, 2) et/ou raccord (4) une seule vis de serrage ou un seul boulon de serrage est fourni(e).

8. Système de support à pinces selon la revendication 1, 2, ou 3, **caractérisé en ce que** lesdites barres profilées (3) et les sièges (9, 17, 18, 22) logeant lesdites barres, formés au sein desdits supports (1, 2) et/ou desdits raccords (4), comportent des surfaces rainurées appariées.

9. Système de support à pinces selon la revendication 1, **caractérisé en ce que** ledit support de base (1) est formé par un corps en forme de U (5), dont l'ouverture centrale (6) loge une roue (8), dans laquelle est formé un siège de logement (9) d'une barre profilée (3), ladite roue comportant des dentures avant (11, 12) capables de coopérer avec au moins une nervure saillante (13) dudit corps (5), pour le verrouillage de ladite roue (8) via lesdits moyens de serrage.

10. Système de support à pinces selon la revendication 9, **caractérisé en ce que** ladite roue (8) est montée rotative sur un axe traversant ledit support de base (1), pour être orientée en position, et fixée dans une position ajustée via lesdits moyens de serrage.

11. Système de support à pinces selon la revendication 9 ou 10, **caractérisé en ce que** lesdits moyens de serrage du support de base (1) consistent en un seul boulon, qui traverse ladite roue (8) pour former son axe de rotation, et **en ce que** le serrage dudit boulon déforme le corps (5) du support (1) même pour verrouiller la roue (8) dans la position souhaitée via la coopération desdites dentures avant (11, 12) avec ladite nervure saillante (13).

12. Système de support à pinces selon l'une quelconque des revendications 9 à 11, **caractérisé en ce que** ladite roue (8) est pourvue, en correspondance de ladite zone partielle déformable élastiquement de la paroi du siège de logement correspondant de la barre profilée (3), d'une saillie (14) qui s'étend au-delà de la surface avant externe de la roue (8).

13. Système de support à pinces selon l'une quelconque des revendications précédentes, **caractérisé en ce que** lesdites barres profilées (3) sont faites de métal.

14. Système de support à pinces selon l'une quelconque des revendications 1 à 12, **caractérisé en ce que** lesdites barres profilées (3) sont faites de matière plastique.
